# EUROPEAN PATENT APPLICATION

(11) **EP 2 952 336 A1**
(43) Date of publication of application: **09.12.2015**
(21) Application number: 15170675.1
(22) Date of filing: 04.06.2015
(51) Int. Cl.: B29C 70/46, B29C 51/12, B29C 51/08, B29K 105/08, B29L 31/30

(54) **METHOD FOR MANUFACTURING AUTOMOTIVE RESIN PART AND MANUFACTURING DEVICE OF AUTOMOTIVE RESIN PART**

(30) Priority: 04.06.2014 JP 2014116171
(71) Applicant: TOYOTA JIDOSHA KABUSHIKI KAISHA, Toyota-shi, Aichi-ken 471-8571 (JP)
(72) Inventor: IWANO, Yoshihiro, Toyota-shi, Aichi-ken 471-8571 (JP)
(74) Representative: Intès, Didier Gérard André

(57) **Abstract**

A method for manufacturing an automotive resin part (40) includes: heating a fiber reinforced plastic material (30) that uses a thermoplastic resin as a binder resin and arranging the fiber reinforced plastic material (30) between a first die (11) having a projected section (16) for molding and a second die (12) having a recessed section (22) for molding that corresponds to the projected section (16); approaching the first die (11) and the second die (12) in a molding direction and holding the fiber reinforced plastic material (30) by the projected section (16) and a movable pad (14) provided in the recessed section (22); and stacking the first die (11) and the second die (12) in the molding direction and press-molding the fiber reinforced plastic material (30) while a state that the fiber reinforced resin material (30) is held between the projected section (16) and the movable pad (14) is maintained by moving the movable pad (14) along with movement of the projected section (16) in the molding direction.

## Description

### BACKGROUND OF THE INVENTION

### 1. Field of the Invention

The invention relates to a method for manufacturing an automotive resin part and a manufacturing device of an automotive resin part.

### 2. Description of Related Art

For a purpose of cost reduction and productivity improvement, it has been considered to switch a binder resin of a fiber reinforced plastic (FRP) from a thermosetting resin to a thermoplastic resin. Stamping molding is adopted as a method for molding the FRP that uses this thermoplastic resin. A molding die that is used for the stamping molding is disclosed in Japanese Patent Application Publication No. 7-256768 (JP 7-256768 A), for example.

However, in the case of the FRP that uses the thermoplastic resin as the binder resin, fluidity of the resin and the fiber is low during molding. Accordingly, occurrence of phenomena such as underfill, thickness reduction, fiber unfilled, and the fiber having directivity during deep drawing by the conventional stamping molding has been concerned. In addition, the above-described conventional molding die is used for molding of preform for an FRP product, and a further additional process is required to obtain a resin part in a final shape.

### SUMMARY OF THE INVENTION

The invention provides a method for manufacturing an automotive resin part and a manufacturing device of an automotive resin part that suppress reduction in strength during deep drawing by stamping molding, regarding an FRP that uses a thermoplastic resin as a binder resin.

A first aspect of the invention relates to a method for manufacturing an automotive resin part. The method for manufacturing an automotive resin part includes: heating a fiber reinforced plastic material that uses a thermoplastic resin as a binder resin and arranging the fiber reinforced plastic material between a first die that has a projected section for molding and a second die that has a recessed section for molding that corresponds to the projected section; approaching the first die and the second die in a molding direction and holding the fiber reinforced plastic material by the projected section and a movable pad that is provided in the recessed section; and stacking the first die and the second die in the molding direction and press-molding the fiber reinforced plastic material while a state that the fiber reinforced resin material is held between the projected section and the movable pad is maintained by moving the movable pad along with movement of the projected section in the molding direction.

In this method for manufacturing an automotive resin part, the molding of the fiber reinforced plastic material of fiber reinforced plastic (FRP) progresses in a state that a portion of the fiber reinforced plastic material is held between the projected section of the first die and the movable pad of the second die. The fiber reinforced plastic material is drawn into the die without being stretched to a great degree. Accordingly, the fiber reinforced plastic material is molded while the resin and the fiber of the fiber reinforced plastic material remain to be mixed, so as to suppress underfill. In addition, the fiber is filled in the resin without having directivity. Thus, regarding the FRP that uses the thermoplastic resin as the binder resin, it is possible to suppress reduction in strength during deep drawing by stamping molding.

As described above, according to the above aspect, such an excellent effect that the reduction in strength during the deep drawing by the stamping molding can be suppressed regarding the FRP that uses the thermoplastic resin as the binder resin can be obtained.

In the above aspect, a tip of the movable pad may be located at a position where the fiber reinforced plastic material is arranged when press molding is initiated, and may move to a die surface at a bottom of the recessed section when the press molding is finished.

In this method for manufacturing an automotive resin part, the tip of the movable pad moves from the position where the fiber reinforced plastic material is arranged to the die surface at the bottom of the recessed section during the press molding. Thus, the fiber reinforced plastic material can be molded in a final shape by single pressing.

According to the above aspect, such an excellent effect that the fiber reinforced plastic material can be molded into the final shape by the single pressing can be obtained.

In the above aspect, the state that the fiber reinforced plastic material is held between the projected section and the movable pad may continue until the press molding is finished.

In this method for manufacturing an automotive resin part, the state that the fiber reinforced plastic material is held between the projected section and the movable pad continues until the press molding is finished. Thus, it is possible to draw the fiber reinforced plastic material into each portion of the die while suppressing a portion of the fiber reinforced plastic material that is held between the projected section and the movable pad from being stretched. In addition, since both surfaces of the fiber reinforced plastic material can be cooled by the projected section and the movable pad, deformation of a product after the molding can be suppressed.

According to the above aspect, such excellent effects that the fiber reinforced plastic material can be drawn into each of the portions of the die while the portion of the fiber reinforced plastic material that is held between the projected section and the movable pad is suppressed from being stretched and that the deformation of the product after the molding can be suppressed can be obtained.

In the above aspect, when the fiber reinforced plastic material is held between the projected section and the movable pad, at least one of the projected section and the movable pad may bite into the fiber reinforced plastic material.

In this method for manufacturing an automotive resin part, at least one of the projected section and the movable pad bites into the fiber reinforced plastic material. Thus, the fiber reinforced plastic material can further be suppressed from being stretched during the molding.

According to the above aspect, such an excellent effect that the fiber reinforced plastic material can further be suppressed from being stretched during the molding can be obtained.

A second aspect of the invention relates to a manufacturing device of an automotive resin part. The manufacturing device of an automotive resin part has: a first die that has a projected section for molding; a second die that has a recessed section for molding that corresponds to the projected section; and a movable pad that is provided in the recessed section, moves along with movement of the projected section in a molding direction, and is configured to hold a fiber reinforced plastic material between the projected section and the movable pad.

In this manufacturing device of an automotive resin part, molding can progress in a state that a portion of the fiber reinforced plastic material is held between the projected section of the first die and the movable pad of the second die. The fiber reinforced plastic material is drawn into the die without being stretched to a great degree. Accordingly, the fiber reinforced plastic material is molded while the resin and the fiber of the fiber reinforced plastic material remain to be mixed, so as to suppress underfill. In addition, the fiber is filled in the resin without having directivity. Thus, regarding the FRP that uses the thermoplastic resin as the binder resin, it is possible to suppress reduction in strength during deep drawing by stamping molding and to obtain a resin part in a final shape by single molding.

According to the above aspect, such excellent effects that the reduction in strength during the deep drawing by the stamping molding can be suppressed regarding the FRP that uses the thermoplastic resin as the binder resin and that the resin part in the final shape can be obtained by the single molding can be obtained.

In the above aspect, a tip of the movable pad may be configured to be located at a position where the fiber reinforced plastic material is arranged when press molding is initiated, and move to a die surface at a bottom of the recessed section when the press molding is finished.

In this manufacturing device of an automotive resin part, the tip of the movable pad moves from the position where the fiber reinforced plastic material is arranged to the die surface at the bottom of the recessed section. Thus, the fiber reinforced plastic material can be molded into the final shape by single pressing.

According to the above aspect, such an excellent effect that the fiber reinforced plastic material can be molded in the final shape by the single pressing can be obtained.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a cross-sectional view of a state that an upper die and a lower die are separated to be opened;
FIG. 1B is a cross-sectional view of a state that a fiber reinforced plastic material is placed on the lower die;
FIG. 1C is a cross-sectional view of a state that the fiber reinforced plastic material is held between a projected section and a movable pad;
FIG. 1D is a cross-sectional view of a state in the middle of pressing;
FIG. 1E is a cross-sectional view of a completed state of pressing;
FIG. 2 is a partially enlarged cross-sectional view of a state that the projected section is biting into the fiber reinforced plastic material; and
FIG. 3 is a perspective view of a shape of a product.

### DETAILED DESCRIPTION OF EMBODIMENTS

A description will hereinafter be made on an embodiment of the invention on the basis of the drawings.

### [Manufacturing Device of Automotive Resin Part]

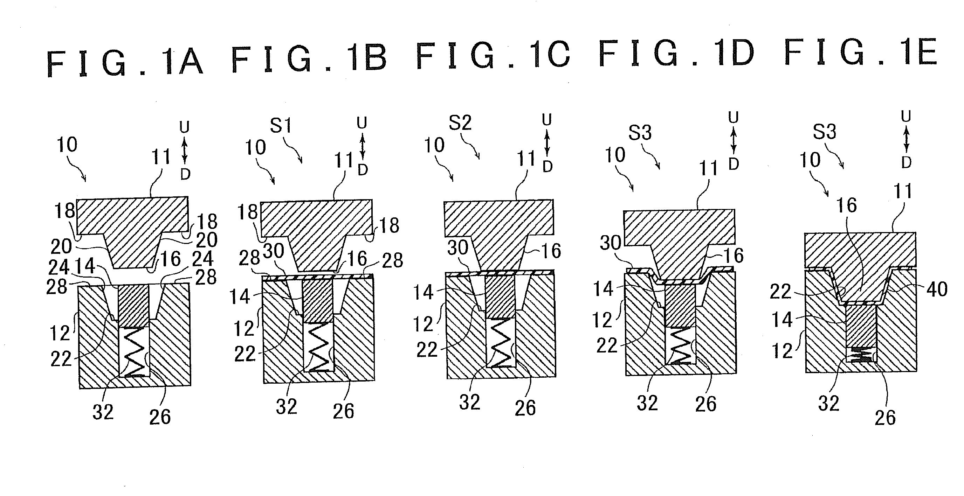

In FIG. 1A, a manufacturing device of an automotive resin part 10 according to this embodiment has an upper die 11 as an example of the first die, a lower die 12 as an example of the second die, and a movable pad 14.

The upper die 11 is a die that has a projected section 16 for molding, and is configured to be movable in a molding direction (an arrow D direction) and a die opening direction (an arrow U direction). The projected section 16 is formed to be projected downward from a base section 18 to have a generally trapezoidal cross section, for example. A side wall section 20 of the projected section 16 is provided with a die releasing gradient.

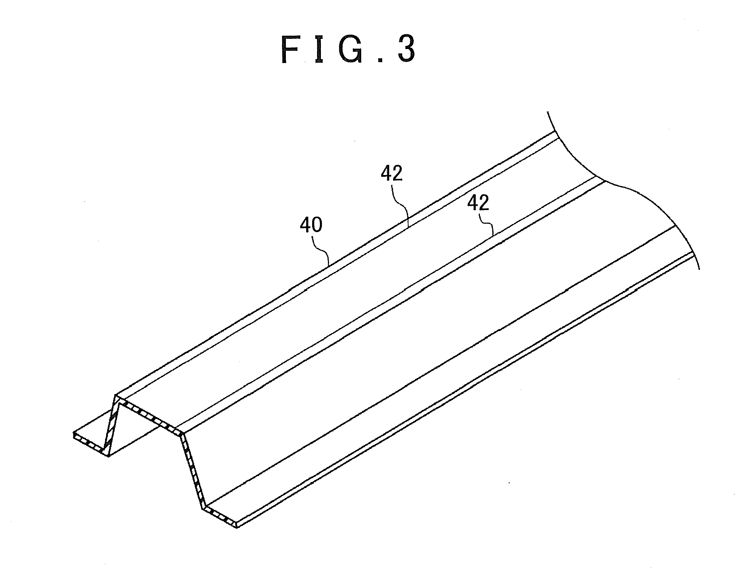

The lower die 12 is a die that has a recessed section 22 for molding that corresponds to the projected section 16, and is fixed to an unillustrated seat. The recessed section 22 is provided to be recessed downward from a base section 28. A side wall section 24 of the recessed section 22 is also provided with a die releasing gradient that is similar to the side wall section 20 of the projected section 16. Shapes of the projected section 16 and the recessed section 22 are appropriately determined in accordance with an automotive resin part 40 that is molded by the upper die 11 and the lower die 12 (FIG. 1E, FIG. 3).

The movable pad 14 is a member that is provided in the recessed section 22, and is constructed of a similar material as that of the lower die 12, for example. The movable pad 14 moves along movement of the projected section 16 in the molding direction, and can hold a fiber reinforced plastic material 30 between the movable pad 14 and the projected section 16. More specifically, a guide section 26 that extends in the molding direction is provided in the lower die 12. This guide section 26 may be located on the inside or outside of the lower die 12. As shown in FIGs. 1B to 1E, the movable pad 14 is configured to be movable in the molding direction along the guide section 26.

The fiber reinforced plastic material 30 is formed by forming fiber reinforced plastic (FRP) that uses a thermoplastic resin as a binder resin into a sheet shape. As the fiber reinforced plastic material 30, carbon fiber reinforced plastic (CFRP) can be used.

A reaction force generation section 32 for applying a reaction force against the projected section 16 to the movable pad 14 is provided between the movable pad 14 and the lower die 12. It is possible by applying the reaction force to the movable pad 14 to hold the fiber reinforced plastic material 30 between the projected section 16 and the movable pad 14 and to mold said fiber reinforced plastic material 30 to have a final shape. As the reaction force generation section 32, a compression spring, a gas spring, a hydraulic/pneumatic equipment, a linear driving mechanism, or the like can be used. In addition, the reaction force may be applied to said movable pad 14 by controlling movement of the movable pad 14.

As shown in FIGs. 1A, 1B, a tip of the movable pad 14 is configured to be located at a position where the fiber reinforced plastic material 30 is arranged when press molding is initiated. More specifically, the tip of the movable pad 14 is at a same height as the base section 28 of the lower die 12, and is in a contact state with a lower surface of the fiber reinforced plastic material 30. Noted that the tip of the movable pad 14 may be at a slightly higher position than the base section 28 of the lower die 12 in a state before initiation of the press molding that the fiber reinforced plastic material 30 (FIG. 1B) is not arranged on the lower die 12. In this case, when the fiber reinforced plastic material 30 is arranged, the movable pad 14 moves downward by a weight of said fiber reinforced plastic material 30, and the tip of the movable pad 14 is located at the same height as the base section 28 of the lower die 12.

As shown in FIG. 1E, the tip of the movable pad 14 is configured to move to a die surface at a bottom of the recessed section 22 when the press molding is finished. Then, at this time, the tip of the movable pad 14 constitutes a portion of the die surface of the lower die 12, that is, a portion of the bottom of the recessed section 22. Noted that the tip of the movable pad 14 may constitute the entire bottom of the recessed section 22.

Noted that, as shown in FIG. 3, in the case where the automotive resin part 40 is a long part, the movable pad 14 may be configured to be long in accordance with the automotive resin part 40. In addition, the plural movable pads 14 may be used in parallel, so as to correspond to the long part.

### (Action)

This embodiment is configured as described above, and an action thereof will hereinafter be described. In FIGs. 1A to 1E, in the manufacturing device of an automotive resin part 10 according to this embodiment, the automotive resin part 40 (FIG. 3) can be manufactured by stamping molding by using a following manufacturing method.

### [Method for Manufacturing Automotive Resin Part]

In FIGs. 1A to 1E, a method for manufacturing an automotive resin part according to this embodiment has a first process S1, a second process S2, and a third process S3. FIG. 1A shows a state that the upper die 11 and the lower die 12 are separated and opened.

In FIG. 1B, in the first process S1, the fiber reinforced plastic material 30 that uses the thermoplastic resin as the binder resin is heated and arranged between the upper die 11 (the first die) that has the projected section 16 for molding and the lower die 12 (the second die) that has the recessed section 22 for molding that corresponds to the projected section 16.

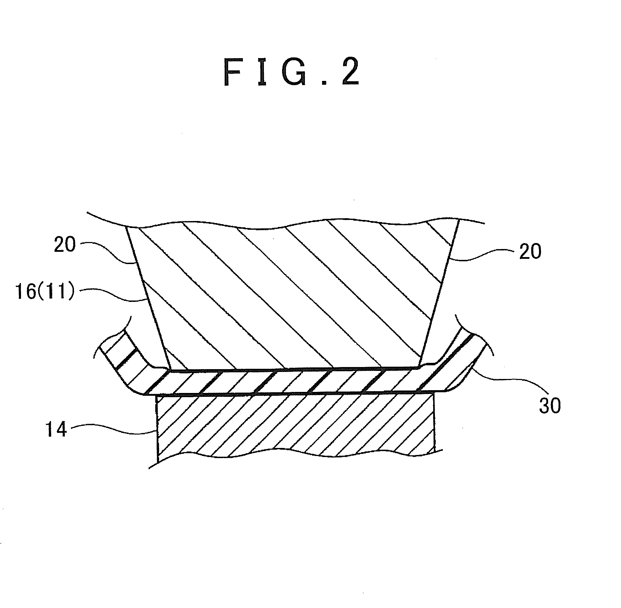

In FIG. 1C, in the second process S2, the upper die 11 and the lower die 12 are approached in the molding direction, and the fiber reinforced plastic material 30 is held between the projected section 16 and the movable pad 14 that is provided in the recessed section 22. At this time, as shown in FIG. 2, at least one of the projected section 16 and the movable pad 14 bites into the fiber reinforced plastic material 30. This state continues until the press molding is finished. Noted that, in an illustrated example, a width of a tip of the projected section 16 is smaller than a width of the tip of the movable pad 14. Accordingly, the projected section 16 bites into the fiber reinforced plastic material 30.

In FIGs. 1D, 1E, in the third process S3, the movable pad 14 moves along with the movement of the projected section 16 in the molding direction. In this way, while a state that the fiber reinforced plastic material 30 is held between the projected section 16 and the movable pad 14 is maintained, the upper die 11 and the lower die 12 are stacked in the molding direction to press-mold the fiber reinforced plastic material 30. In the case where the reaction force generation section 32 is the compression spring, the gas spring, or the like that is deformed or displaced by an external force, the movable pad 14 moves by following the movement of the projected section 16 in the molding direction. At this time, as described above, at least one of the projected section 16 and the movable pad 14 bites into the fiber reinforced plastic material 30, and a portion of said fiber reinforced plastic material 30 that is held between the projected section 16 and the movable pad 14 is compressed to a greater degree than a portion of said fiber reinforced plastic material 30 that is not held between the projected section 16 and the movable pad 14 in a thickness direction of the fiber reinforced plastic material 30. In this state, the upper die 11 and the lower die 12 are stacked in the molding direction.

In this method for manufacturing an automotive resin part, the molding of the fiber reinforced plastic material 30 of the fiber reinforced plastic (FRP) progresses in a state that the portion of the fiber reinforced plastic material 30 is held between the projected section 16 of the upper die 11 and the movable pad 14 of the lower die 12. The fiber reinforced plastic material 30 is drawn into the die without being stretched to a great degree. Accordingly, the fiber reinforced plastic material 30 is molded while the resin and the fiber thereof remain to be mixed, so as to prevent underfill. In addition, the fiber is filled in the resin without having directivity. Thus, regarding the FRP that uses the thermoplastic resin as the binder resin, it is possible to suppress reduction in strength during deep drawing by the stamping molding. By performing the deep drawing, a part with bending rigidity can be developed.

In addition, the tip of the movable pad 14 is located at the position where the fiber reinforced plastic material 30 is arranged when the press molding is initiated. Then, the tip of the movable pad 14 moves to the mold surface at the bottom of the recessed section 22 when the press molding is finished. Thus, the fiber reinforced plastic material 30 can be molded into the final shape by the single pressing. Therefore, cost reduction and productivity improvement are possible.

The state that the fiber reinforced plastic material 30 is held between the projected section 16 and the movable pad 14 continues until the press molding is finished. More specifically, the reaction force generation section 32 applies the reaction force to the movable pad 14 against a pressing force of the projected section 16. Accordingly, the fiber reinforced plastic material 30 can be held between the projected section 16 and the movable pad 14, and said fiber reinforced plastic material 30 can be molded into the final shape. At this time, since at least one of the projected section 16 and the movable pad 14 bites into the fiber reinforced plastic material 30, it is possible to draw the fiber reinforced plastic material 30 into each portion of the die while suppressing the portion of the fiber reinforced plastic material 30 that is held between the projected section 16 and the movable pad 14 from being stretched. In addition, since both surfaces of the fiber reinforced plastic material 30 can be cooled by the projected section 16 and the movable pad 14, deformation of a product after the molding can be suppressed.

Furthermore, the upper die 11 and the lower die 12 separate from each other, and the automotive resin part 40 is pushed out when the movable pad 14 is returned to an original position. Thus, a die releasing property becomes favorable.

Noted that, due to a slight gap between the movable pad 14 and the recessed section 22 during the press molding or due to a difference in a cooling speed with respect to the fiber reinforced plastic material 30 between the movable pad 14 and the recessed section 22, a boundary line 42 is clearly formed in the molded automotive resin part 40 (FIG. 3). This boundary line 42 is formed by an aspect such as a difference in coloration, a striped projection, or a burr.

### [Another Embodiment]

The example of the embodiment of the invention has been described so far. However, the embodiment of the invention is not limited to the above, and it is needless to say that, in addition to the above, various modifications can be made to the invention within the scope of the gist thereof for implementation.

For example, the upper die 11 is used as the first die, and the lower mold 12 is used as the second die. However, the lower die may be used as the first die, and the upper die may be used as the second die. In addition, the tip of the movable pad 14 moves to the die surface of the bottom of the recessed section 22 when the press molding is finished. However, displacement of the tip of the movable pad 14 can appropriately be changed in accordance with a product shape. Furthermore, the state that the fiber reinforced plastic material 30 is held between the projected section 16 and the movable pad 14 continues until the press molding is finished. However, the movable pad 14 may be separated from the fiber reinforced plastic material 30 before the press molding is finished as long as there is no problem with strength or finishing of the product.

The second process S2 and the third process S3 do not always have to be separate processes but may be combined into one process.

## Claims

1. A method for manufacturing an automotive resin part (40), the method **characterized by** comprising:
heating a fiber reinforced plastic material (30) that uses a thermoplastic resin as a binder resin and arranging the fiber reinforced plastic material between a first die (11) that has a projected section (16) for molding and a second die (12) that has a recessed section (22) for molding that corresponds to the projected section (16);
approaching the first die (11) and the second die (12) in a molding direction and holding the fiber reinforced plastic material (30) by the projected section (16) and a movable pad (14) that is provided in the recessed section (22); and
stacking the first die (11) and the second die (12) in the molding direction and press-molding the fiber reinforced plastic material (30) while a state that the fiber reinforced resin material (30) is held between the projected section (16) and the movable pad (14) is maintained by moving the movable pad (14) along with movement of the projected section (16) in the molding direction.

2. The method for manufacturing an automotive resin part (40) according to claim 1 **characterized in that**
a tip of the movable pad (14) is located at a position where the fiber reinforced plastic material (30) is arranged when press molding is initiated, and moves to a die surface at a bottom of the recessed section (22) when the press molding is finished.

3. The method for manufacturing an automotive resin (40) part according to claim 1 or claim 2 **characterized in that**
the state that the fiber reinforced plastic material (30) is held between the projected section (16) and the movable pad (14) continues until the press molding is finished.

4. The method for manufacturing an automotive resin part (40) according to any one of claim 1 to claim 3 **characterized in that**
when the fiber reinforced plastic material (30) is held between the projected section (16) and the movable pad (14), at least one of the projected section (16) and the movable pad (14) bites into the fiber reinforced plastic material (30).

5. A manufacturing device of an automotive resin part (40), the device **characterized by** comprising:
a first die (11) that has a projected section (16) for molding;
a second die (12) that has a recessed section (22) for molding that corresponds to the projected section (16); and
a movable pad (14) that is provided in the recessed section (22), moves along with movement of the projected section (16) in a molding direction, and is configured to hold a fiber reinforced plastic material (30) between the projected section (16) and the movable pad (14).

6. The manufacturing device of an automotive resin part (40) according to claim 5 **characterized in that**
a tip of the movable pad (14) is configured to be located at a position where the fiber reinforced plastic material (30) is arranged when press molding is initiated, and move to a die surface at a bottom of the recessed section (22) when the press molding is finished.
